# EUROPÄISCHE PATENTSCHRIFT

(11) **EP 2 820 933 B1**
(45) Veröffentlichungstag und Bekanntmachung des Hinweises auf die Patenterteilung: **30.05.2018**
(21) Anmeldenummer: 14170349.6
(22) Anmeldetag: 28.05.2014
(51) Int. Cl.: A01B 59/06

(54) **ARBEITSFAHRZEUG MIT EINER HECKSEITIG ANGEBRACHTEN ANHÄNGEVORRICHTUNG**
WORKING VEHICLE WITH A TRAILER COUPLING MOUNTED AT ITS REAR
VÉHICULE AVEC UN DISPOSITIF D'ATTELAGE INSTALLÉ EN ARRIÉRE DU VÉHICULE

(30) Priorität: 19.06.2013 DE 102013211510
(43) Veröffentlichungstag der Anmeldung: 07.01.2015
(73) Patentinhaber: Deere & Company, Moline, IL 61265 (US)
(72) Erfinder: Oberhaus Dr., Christian, 68239 Mannheim (DE); Lenz, Reiner, 69181 Leimen (DE); Kremmer Dr., Martin, 68161 Mannheim (DE); Zahn, Werner, 68804 Altlußheim (DE)
(74) Vertreter: John Deere GmbH & Co. KG

(56) Entgegenhaltungen:
- EP-A1- 2 457 752
- EP-A2- 1 251 016
- US-A- 4 340 240
- US-A1- 2004 155 430
- US-B1- 6 712 381

## Beschreibung

Die Erfindung betrifft eine Anhängevorrichtung für ein landwirtschaftliches Arbeitsfahrzeug, mit zwei am Fahrzeugheck abgestützten und vertikal ausgerichteten Seitenwangen und einer ein Kupplungsglied tragende Platte, die gegenüber den Seitenwangen in einer Arbeitsposition positionierbar ist.

Eine solche Anhängevorrichtung ist aus der DE 103 04 978 A1 bekannt. Hierbei lassen sich die Kupplungsmittel in horizontaler Richtung verschieben und in eine gewünschte Lage bringen. Hierbei ist es auch möglich, die Halterung mit den Kupplungsmitteln vollständig aus dem Aufbau der beiden Kupplungsträger herauszunehmen und auszutauschen. Bei geeigneter Verschiebung oder bei herausgenommener Halterung ergibt sich im Bereich der Anhängevorrichtung ein Freiraum, der für andere Anhängesysteme, beispielsweise für ein Zugpendel, zur Verfügung steht.

Ausgehend hiervon besteht die Aufgabe der vorliegenden Erfindung darin, eine Anhängevorrichtung bereitzustellen, die kompakt baut und einen Aufbewahrungsort für eine nicht benötigte Kugelkopfplatte aufweist.

Die Aufgabe wird gelöst durch eine Anhängevorrichtung für ein landwirtschaftliches Arbeitsfahrzeug, umfassend zwei am Fahrzeugheck abgestützte und vertikal ausgerichtete Seitenwangen und eine ein Kupplungsglied tragende Platte, die gegenüber den Seitenwangen in einer Transportposition und einer Arbeitsposition positionierbar ist, wobei die Platte (32) gegenüber den Seitenwangen (12) in der Arbeitsposition mittels zumindest eines Steckbolzens (42) überwiegend horizontal arretiert ist und in der Transportposition in vertikaler Richtung oberhalb der Arbeitsposition liegt und auf das Fahrzeugheck zu in vertikaler Richtung abfallend geneigt ist.

Bei der Platte mit der Kupplungskugel handelt es sich beispielsweise um eine K80 Kugelkopfkupplungslade. Hierbei bedeutet K80, dass eine Kugel mit 80mm Durchmesser vorgesehen ist. Ein kugelseitiger Niederhalter sorgt dafür, dass die Kupplungspfanne des Anhängers oder der angehängten Maschine nicht von der Kugel rutscht.

Die vertikal ausgerichteten Seitenwangen werden auch als U-Schienen bezeichnet. Ihr lateraler Abstand wird als Spurweite, Schienenbreite oder auch Führungsabstand bezeichnet.

Bei der erfindungsgemäßen Anhängevorrichtung ist von Vorteil, dass sie in der Transportposition eine Verstauungsmöglichkeit für die Kugellade bereitstellt. Dies bietet Kundennutzen und stellt beim Versand des Fahrzeugs aus der Fabrik sicher, dass Zubehör sicher am Fahrzeug verstaut ist.

Hierdurch ergibt sich für die Bedienperson eine klare Abgrenzung der Arbeitsposition von der Transportposition, da in der Transportposition die Kugellade abfallend geneigt ist. Es ist vorgesehen, dass in der Transportposition ein Anhänger mit Kupplungspfanne nicht angehängt werden kann, da der kugelseitige Niederhalter infolge der Neigung nicht geöffnet werden kann.

Bevorzugt ist die Platte zwischen den Seitenwangen in jeweils einander zugewandten Führungsnuten in die Arbeitsposition einschiebbar. Hierdurch wird auf einfache Weise eine abnehmbar integrierte Kupplung bereitgestellt.

Bevorzugt sind die Führungsnuten an unteren Enden der Seitenwangen angeordnet und die unteren Enden aufeinander zu eingezogen, um eine geringere laterale Breite im Bereich der unteren Enden der Seitenwangen zu bilden. Dieser geringere Führungsabstand zwischen den unteren Enden der Seitenwangen beziehungsweise den U-Schienen führt zu einer reduzierten Breite der Anhängevorrichtung in dem Bereich, in dem die Unterlenker in Fahrzeuglängsrichtung nach hinten zum Überstand über das Fahrzeug geführt werden. Durch diesen reduzierten Führungsabstand der Seitenwangen ist es möglich, kostengünstige Flachstahlunterlenker an dem Fahrzeug zu verbauen. Weiterhin führt der reduzierte Führungsabstand zwischen den unteren Enden der Seitenwangen zu einer kraft- und spannungsoptimierten Ausgestaltung im Aufnahmebereich der Kugellade, so dass eine Stützlast von vier Tonnen bereitgestellt wird.

Bevorzugt ist die Platte zwischen den Seitenwangen in jeweils einander zugewandte Schienen bis zu einer Dreipunkt-Klemmung in die Transportposition einschiebbar. Hierbei kann vorgesehen sein, dass die Schienen als in die Seitenwangen eingegossene Schienen bereitgestellt werden. In einer Ausführungsform kann vorgesehen sein, dass die Platte in der Transportposition mittels zumindest eines Steckbolzens arretierbar ist. Hierdurch ist eine zusätzliche formschlüssige Verliersicherung bereitgestellt.

Bevorzugt ist oberhalb der Platte eine von den Seitenwangen höhenverstellbar gehaltene Kupplungsvorrichtung vorgesehen. Hiermit ergibt sich eine 5 Positionen 3/1 Anhängevorrichtung mit drei Anhängevarianten, nämlich Zugpendel, K80 Kugellade, oder alternativ ein Piton-fix, und obere Anhängekupplung, bei gleichzeitiger Möglichkeit, die Kugellade in der Transportposition während des Zugpendelbetriebs zu verstauen.

Ein Ausführungsbeispiel der erfindungsgemäßen Anhängevorrichtung wird anhand der nachfolgenden Zeichnungen beschrieben. Hierin zeigen
- Figur 1: eine perspektivische Darstellung einer erfindungsgemäßen Anhängevorrichtung mit der Kugellade in der Arbeitsposition
- Figur 2: eine perspektivische Darstellung einer erfindungsgemäßen Anhängevorrichtung mit der Kugellade in der Transportposition
- Figur 3: einen Teilschnitt durch eine Seitenwange und die Kugellade der erfindungsgemäßen Anhängevorrichtung

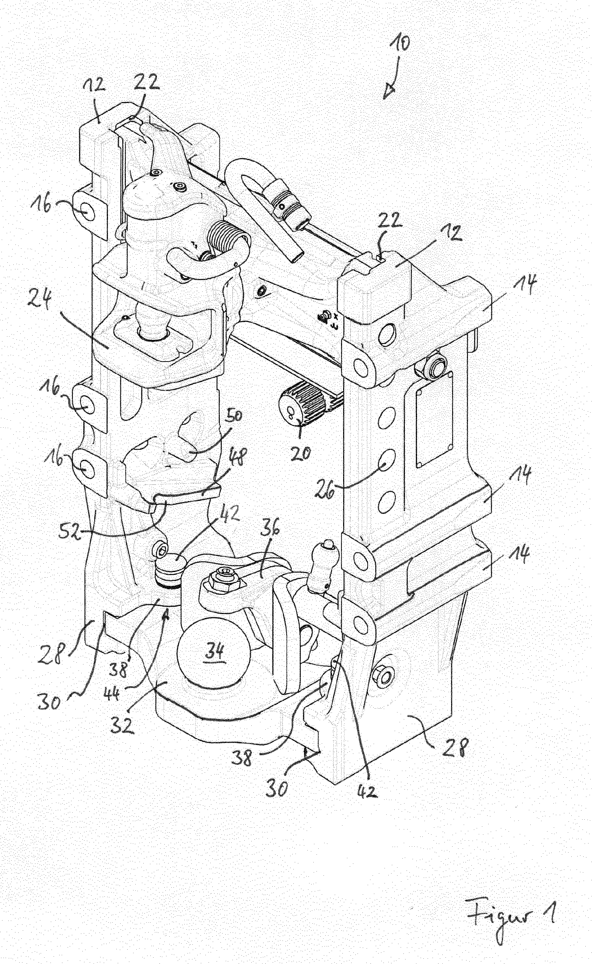

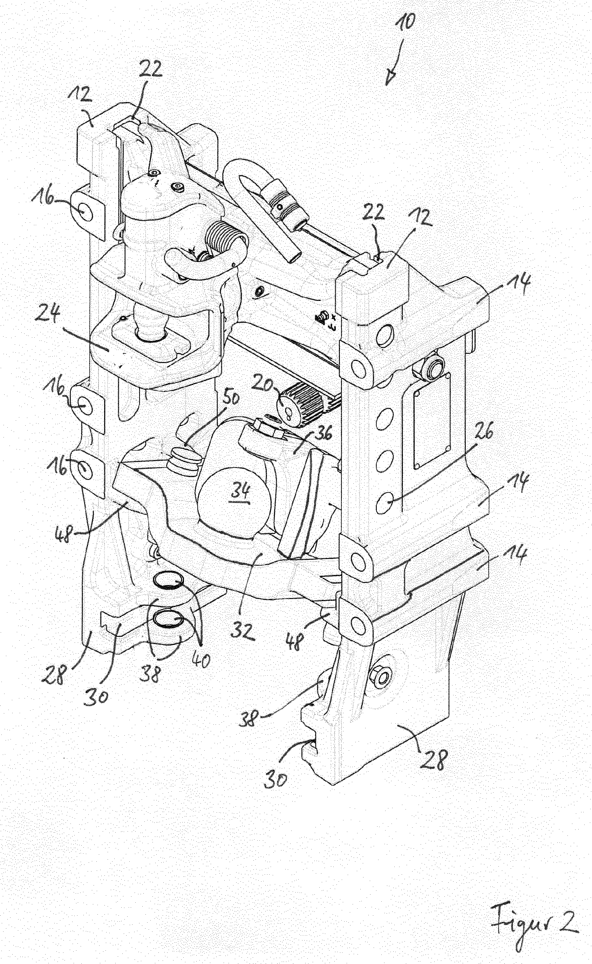

Die Figuren 1 und 2 werden zunächst gemeinsam beschrieben und zeigen eine erfindungsgemäße Anhängevorrichtung 10, die heckseitig an einem nicht dargestellten Arbeitsfahrzeug, welches insbesondere ein Schlepper sein kann, angebracht ist. Die Anhängevorrichtung 10 umfasst zwei Seitenwangen 12, die vertikal und grundsätzlich parallel zueinander ausgerichtet sind. Die Seitenwangen 12 weisen vorliegend jeweils drei Befestigungsansätze 14 auf, die von Durchgangsbohrungen 16 zur Befestigung der Anhängevorrichtung 10 an einem Fahrzeugheck, insbesondere einem Zapfwellengehäuse und/oder Differentialgehäuse, mittels nicht dargestellten Haltebolzen durchsetzt sind. Im Hintergrund der Anhängevorrichtung 10 ist eine Zapfwelle 20 zu erkennen.

In die Seitenwangen 12 ist jeweils eine vertikale Führungsnut 22 eingeformt. Die Führungsnuten 22 sind innenseitig einander zugewandt und dienen zur Aufnahme einer höhenverstellbaren Kupplungsvorrichtung 24. Zur Arretierung der Kupplungsvorrichtung 24 weisen die Seitenwangen im Bereich der vertikalen Führungsnuten 22 lateral gerichtete Bohrungen 26 auf, in die Rastbolzen der Kupplungsvorrichtung 24 zu deren Arretierung in unterschiedlichen Höhen eingreifen können.

Die unteren Enden 28 der Seitenwangen 12 sind aufeinander zu eingezogen, so dass die Seitenwangen 12 in diesem Bereich einen reduzierten beziehungsweise geringeren Führungsabstand als in den darüberliegenden Bereichen aufweisen. Hierdurch ist der Einsatz von Flachstahlunterlenkern anstelle von S-förmig gekröpften Schmiedeunterlenkern möglich, mit dem Vorteil eines günstigen Kraftverlaufs und der kostengünstigeren Herstellung.

Im Bereich der unteren Enden 28 der Seitenwangen 12 sind an diesen einander zugewandt horizontale Führungsnuten 30 angeformt, die zum Einschieben und anschließenden horizontalen Aufnahme einer Platte 32 dienen, wie in der Figur 1 zu erkennen ist. Auf der Platte 32 ist ein Kupplungsglied 34 in Form einer Kugelkopfkupplung gehalten. Auf der Platte 32 ist weiterhin ein Niederhalter 36 verschwenkbar gehalten, um eine nicht dargestellte Kupplungspfanne gegenüber der Kugelkopfkupplung 34 zu sichern und ein Lösen der Verbindung während der Fahrt zu verhindern. Die Einheit bestehend aus Platte 32, Kugelkopfkupplung 34 und Niederhalter 36 kann auch als Kugellade bezeichnet werden.

Die Seitenwangen 12 weisen beidseits der horizontalen Führungsnuten 30 Haltelaschen 38 mit vertikal fluchtenden Bohrungen 40 auf, in die Steckbolzen 42 eingesteckt sind. Zur Übertragung von Zugkräften von der Kugelkopfkupplung 34 über die Platte 32 auf die Seitenwangen 12 weist die Platte 32 ebenfalls Bohrungen 44 auf, so dass die Steckbolzen 42 bei in die horizontalen Führungsnuten 30 eingeschobener Platte 32 durch die Bohrungen 40 der Haltelaschen 38 und die Bohrungen 44 der Platte 32 durchgesteckt sind. Zur Sicherung der eingesteckten Steckbolzen 42 dienen durch die Steckbolzen durchschiebbare Sicherungsspangen.

Im Betrieb kann ein Zugpendel zum Einsatz kommen, welches an einem unteren Bereich des Schleppers befestigt ist und nach hinten in einen Bereich ragt, in dem die Kugellade sich in der Arbeitsposition befindet. Demnach können nicht gleichzeitig ein Zugpendel und eine Kugellade in der Arbeitsposition montiert sein. Erfindungsgemäß ist hiervon ausgehend vorgesehen, dass bei Zugpendelbetrieb die Kugellade in eine Transportposition überführt werden kann, in der sie nicht mit dem Zugpendel kollidiert.

Die Transportposition der Kugellade ist in der Figur 2 dargestellt und zeichnet sich dadurch aus, dass sie in vertikaler Richtung oberhalb der Arbeitsposition der Kugellage liegt und dass die Kugellade auf das Fahrzeugheck zu in vertikaler Richtung abfallend geneigt ist. Der Neigungswinkel beträgt vorliegend 30° bezogen auf eine Horizontale, kann hiervon aber auch abweichen.

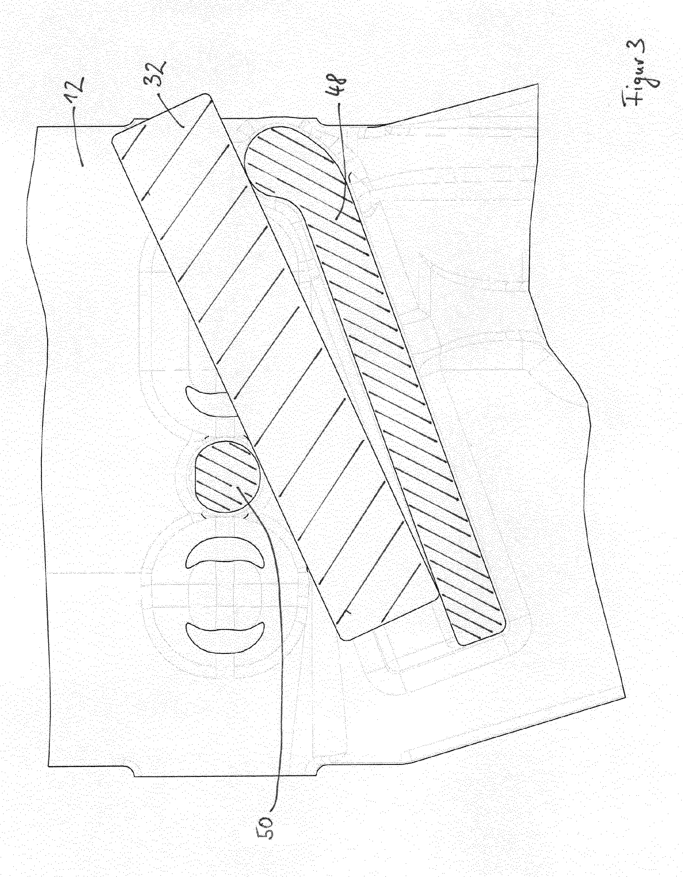

In den Figuren 2 und 3 ist zu erkennen, dass an den Seitenwangen 12 einander zugewandt Schienen 48 angeformt sind, die zur Aufnahme der Kugellade in der Transportposition dienen. Gemäß Figur 3 wird die Kugellade von der rechten Seite aus eingeschoben und zwar bis zu einer Dreipunkt-Klemmung, die aus zwei Klemmpunkten mit der Schiene 48 und aus einem weiteren Klemmpunkt mit einem vertikal oberhalb der Schiene 48 angeordneten Klemmvorsprung 50 besteht. Zusätzlich zu dieser Dreipunkt-Klemmung kann vorgesehen sein, dass die zur jeweils anderen Seitenwange 12 ragenden Stirnseiten der Schiene 48 derart mit einer Kontur 52 versehen sind, dass die Kugellade über die in die Bohrungen 44 eingesteckten Steckbolzen 42 formschlüssig gegenüber den Schienen 48 gesichert ist. Bei der Schiene 48 handelt es sich bevorzugt um eine eingegossene Rohgussschiene. Auf eine anschließende Oberflächenbearbeitung kann verzichtet werden. Es wird eine werkzeuglose und verliersichere Klemmung der Kugellade unabhängig von der Gusstoleranz der Seitenwangen 12 bereitgestellt. Durch die erfindungsgemäße Anhängevorrichtung ergeben sich im oberen Bereich ein Zapfwellenfreiraum nach Standard ISO 500 mit einer Innenbreite von 360 mm für eine Zapfwelle Typ 3 und im unteren Bereich eine schlanke kraft- und spannungsoptimierte Gestaltung zur Aufnahme einer K80 Kugelschublade bei einer Stützlast von vier Tonnen.

Die Transportposition für die Kugellade ermöglicht das Mitführen der Kugellade beim Einsatz eines Zugpendels am der 3-Varianten Anhängevorrichtung bestehend aus 5 Pos. 3/1 Vorrichtung mit Zugpendel, K80 Kugellade, oder alternativ ein Piton-fix, und oberer Kupplungsvorrichtung bei gleichzeitig voller Zapfwellenbeweglichkeit, da der ISO500 Zapfwellenfreiraum nicht beeinträchtigt wird. Für den Bediener ergibt sich eine klare Unterscheidung zwischen der Arbeitsposition und der Transportposition, da letztere zum Fahrzeug hin abfallend ausgeführt ist. Zudem ist eine K80 Kupplungspfanne in der Transportposition der Kugellade nicht kuppelbar, da der Niederhalter der Kugellade nicht geöffnet werden kann. Schließlich ist in der Transportposition der Zugang zu der Zapfwelle blockiert, so dass eine Gelenkwelle nicht kuppelbar ist.

### Bezugszeichenliste

- 10: Anhängevorrichtung
- 12: Seitenwange
- 14: Befestigungsansatz
- 16: Durchgangsbohrung
- 20: Zapfwelle
- 22: Führungsnut
- 24: Kupplungsvorrichtung
- 26: Bohrung
- 28: unteres Ende der Seitenwangen
- 30: Führungsnut
- 32: Platte
- 34: Kupplungsglied
- 36: Niederhalter
- 38: Haltelasche
- 40: Bohrung
- 42: Steckbolzen
- 44: Bohrung
- 48: Schiene
- 50: Klemmvorsprung
- 52: Kontur

## Patentansprüche

1. Arbeitsfahrzeug, insbesondere Schlepper, mit einer heckseitig angebrachten Anhängevorrichtung (10), umfassend zwei am Fahrzeugheck abgestützte und vertikal ausgerichtete Seitenwangen (12) und eine ein Kupplungsglied (34) tragende Platte (32), die gegenüber den Seitenwangen (12) in einer Transportposition und einer Arbeitsposition positionierbar ist, wobei die Platte (32) gegenüber den Seitenwangen (12) in der Arbeitsposition mittels zumindest eines Steckbolzens (42) überwiegend horizontal arretiert ist,
**dadurch gekennzeichnet, dass** die Platte (32) in der Transportposition in vertikaler Richtung oberhalb der Arbeitsposition liegt und auf das Fahrzeugheck zu in vertikaler Richtung abfallend geneigt ist.

2. Arbeitsfahrzeug nach Anspruch 1, wobei die Platte (32) zwischen den Seitenwangen (12) in jeweils einander zugewandten Führungsnuten (30) in die Arbeitsposition einschiebbar ist.

3. Arbeitsfahrzeug nach Anspruch 1 oder 2, wobei die Platte (32) zwischen den Seitenwangen (12) in jeweils einander zugewandte Schienen (48) bis zu einer Dreipunkt-Klemmung in die Transportposition einschiebbar ist.

4. Arbeitsfahrzeug nach Anspruch 3, wobei die Platte (32) mittels zumindest eines Steckbolzens (42) in der Transportposition arretierbar ist.

5. Arbeitsfahrzeug nach einem der Ansprüche 1 bis 4, wobei oberhalb der Platte (32) eine von den Seitenwangen (12) höhenverstellbar gehaltene Kupplungsvorrichtung (24) vorgesehen ist.

## Claims

1. Working vehicle, in particular tractor, with a trailer device (10) mounted at the rear, comprising two side members (12) which are supported on the vehicle rear and are oriented vertically, and a plate (32) which carries a coupling member (34) and is positionable in relation to the side members (12) in a transport position and in a working position, wherein the plate (32) is locked predominantly horizontally in relation to the side members (12) in the working position by means of at least one plug-in bolt (42),
**characterized in that**, in the transport position, the plate (32) lies in the vertical direction above the working position and is inclined dropping in the vertical direction towards the vehicle rear.

2. Working vehicle according to Claim 1, wherein the plate (32) is pushable between the side members (12) in in each case mutually facing guide grooves (30) into the working position.

3. Working vehicle according to Claim 1 or 2, wherein the plate (32) is pushable between the side members (12) in in each case mutually facing rails (48) into the transport position as far as a three-point clamping.

4. Working vehicle according to Claim 3, wherein the plate (32) is lockable in the transport position by means of at least one plug-in bolt (42).

5. Working vehicle according to one of Claims 1 to 4, wherein a coupling device (24) which is held in a height-adjustable manner by the side members (12) is provided above the plate (32).

## Revendications

1. Véhicule de travail, en particulier tracteur, comprenant un dispositif d'attelage (10) monté du côté arrière, comprenant deux joues latérales (12) supportées à l'arrière du véhicule et orientées verticalement et une plaque (32) portant un organe d'accouplement (34), laquelle peut être positionnée par rapport aux joues latérales (12) dans une position de transport et une position de travail, la plaque (32) étant bloquée sensiblement horizontalement par rapport aux joues latérales (12) dans la position de travail au moyen d'au moins un boulon d'enfichage (42),
**caractérisé en ce que** la plaque (32), dans la position de transport, est située dans la direction verticale au-dessus de la position de travail, et est inclinée vers le bas dans la direction verticale vers l'arrière du véhicule.

2. Véhicule de travail selon la revendication 1, dans lequel la plaque (32) peut être enfoncée dans la position de travail entre les joues latérales (12) dans des rainures de guidage (30) tournées l'une vers l'autre.

3. Véhicule de travail selon la revendication 1 ou 2, dans lequel la plaque (32) peut être enfoncée dans la position de transport entre les joues latérales (12) dans des rails (48) à chaque fois tournés l'un vers l'autre jusque dans un serrage à trois points.

4. Véhicule de travail selon la revendication 3, dans lequel la plaque (32) peut être bloquée dans la position de transport au moyen d'au moins un boulon d'enfichage (42).

5. Véhicule de travail selon l'une quelconque des revendications 1 à 4, dans lequel un dispositif d'accouplement (24) retenu de manière réglable en hauteur par les joues latérales (12) est prévu au-dessus de la plaque (32).
